# EUROPÄISCHE PATENTSCHRIFT

(11) **EP 0 727 268 B1**
(45) Veröffentlichungstag und Bekanntmachung des Hinweises auf die Patenterteilung: **14.04.1999**
(21) Anmeldenummer: 96101715.9
(22) Anmeldetag: 07.02.1996
(51) Int. Cl.: B22D 41/24, B22D 41/34

(54) **Schieberverschluss-system für einen Metallschmelze enthaltenden Behälter**
Sliding closure system for a container holding a bath of molten metal
Système de fermeture à tiroir pour un convertisseur contenant un bain métallique

(30) Priorität: 17.02.1995 CH 460/95
(43) Veröffentlichungstag der Anmeldung: 21.08.1996
(73) Patentinhaber: Stopinc Aktiengesellschaft, CH-6340 Baar (CH)
(72) Erfinder: Keller, Werner, CH-6312 Steinhausen (CH); Toaldo, Walter, CH-6300 Zug (CH); Müller, Hans, CH-6312 Steinhausen (CH); Plattner, Werner, CH-6331 Hünenberg (CH); Pfyl, Anton, CH-8910 Affoltern a.A. (CH)
(74) Vertreter: Brückner, Raimund, Dipl.-Ing.

(56) Entgegenhaltungen:
- WO-A-94/23867
- DE-C- 3 420 810

## Beschreibung

Die Erfindung betrifft ein Schiebeverschlußsystem für einen Metallschmelze enthaltenden Behälter, mit einer feuerfesten Bodenplatte und einer an letzterer mittels Federorganen abdichtend anpreßbaren feuerfesten Schieberplatte, welche längsverschiebbar in einer Schiebereinheit angeordnet ist, wobei die Bodenplatte auf ihrer Unterseite eine Gleitfläche und auf ihrer Oberseite eine zur Gleitfläche parallele Gleitebene aufweist, mit welcher die Bodenplatte an einem am Behälterausguß positionierten feuerfesten Kopfteil anpreßbar ist, wobei ein die Bodenplatte sowie die Schiebereinheit mit der Schieberplatte aufnehmender Gehäuserahmen vorgesehen ist, der durch Verschieben desselben vom Behälter wegnehmbar ist und in welchem die Bodenplatte in Richtung ihrer Gleitfläche stationär, indessen senkrecht dazu verstellbar lagert.

Bei einem solchen Schiebeverschlußsystem müssen die Schiebeverschlußplatten regelmäßig, beispielsweise nach einigen Konverterabstichen, gewechselt werden, da die Platten einem relativ starken Verschleiß ausgesetzt sind. Ein solcher Wechsel ist jedoch mit einigem Arbeitsaufwand verbunden, da man den Verschluß vom heißen Konverter wegnehmen, öffnen und nach Ersetzen der Platten wieder an das Abstichloch des Konverters montieren muß, wobei sicherzustellen ist, daß die Verbindung zwischen der Bodenplatte und dem daran anschließenden Abstichstein absolut dicht ist.

Bei einem gattungsgemäßen Schiebeverschlußsystem nach der Druckschrift WO-A1 94/23867 ist der Gehäuserahmen entlang einer ebenen Führungsplatte verschiebbar und durch ortsfest angeordnete Andrückfedern beaufschlagt. Das hat zur Folge, daß der Gehäuserahmen bis zur Freigabeposition unter Federspannung verschoben wird, bis er auf seiner gesamten Länge den Wirkungsbereich der Andrückfedern verlassen hat. Darüberhinaus sind die im Gehäuserahmen angeordneten Federorgane für die Platten während der gesamten Operation voll wirksam. Die Platten werden also im Gehäuserahmen stets von den Federorganen beaufschlagt.

Beim Schiebeverschlußsystem nach der Druckschrift WO-A1 94/23867 ist in einer zweiten Ausführungsform ein Mechanismus vorgesehen, mit dem die Bodenplatte zusammen mit der Schieberplatte vom Konverterbehälter wegnehmbar ist. Im Betriebszustand bewirkt der Mechanismus, daß die Bodenplatte zum Behälter fixiert ist, hingegen beim Demontieren die Bodenplatte vom Behälter gelöst und mit der Schieberplatte gekoppelt wird, und folglich beide Platten gemeinsam entfernt werden können. Ein solcher Mechanismus ist vom Aufbau her kompliziert und für den äußerst rauhen Betrieb in Stahlwerken schlecht geeignet.

Der vorliegenden Erfindung liegt die Aufgabe zugrunde, ein Schiebeverschlußsystem der eingangs genannten Gattung derart weiterzuentwickeln, daß der Schiebeverschluß bei einfachem und robustem Aufbau schnell und problemlos vom Behälter weggenommen und mit neu eingesetzten feuerfesten Platten wieder genauso schnell an den Ausguß des Behälters montiert werden kann, ohne dabei die Betriebssicherheit des Systems zu beeinträchtigen.

Erfindungsgemäß wird diese Aufgabe dadurch gelöst, daß der Gehäuserahmen unterhalb des Behältersausgusses auf quer zu diesem verlaufenden und an ihm befestigten Führungsschienen längsverschiebbar gehalten ist, und daß die Federorgane durch Verschieben des Gehäuserahmens um einen definierten Hub von ihrer Verspannung lösbar sind.

Auf diese Weise ist es möglich, zunächst durch kurzes Verschieben des Gehäuserahmens entlang der Führungsschienen die Federsspannung der Federorgane abzubauen und anschließend den nunmehr gelösten Gehäuserahmen durch weiteres Verschieben desselben in eine Freigabeposition zu bringen, in welcher er mit den darin angeordneten Schiebeverschlußplatten problemlos vom Behälter abnehmbar ist. Danach sind die Platten leicht vom Gehäuserahmen entfernbar. Letzterer kann anschließend mit darin eingesetzten neuen Platten wieder an den Behälter praktisch in einem Arbeitsgang montiert werden. Sowohl die Abnahme des Gehäuserahmens mit den alten Platten als auch die Montage desselben mit den neuen Platten können dabei ohne manuellen Eingriff durchgeführt werden, ohne daß eine Bedienungsperson an dem am heißen Konverter befindlichen Schiebeverschluß von Hand auszuführende Manipulation vornehmen muß.

Bei einer vorteilhaften Ausführungsform gemäß der Erfindung sind zwei parallel zueinander angeordnete L-förmige Führungsschienen vorgesehen, die jeweils eine innenliegende, endseitig je eine Absenkung aufweisende Führungsbahn bilden, auf welchen der Gehäuserahmen mit beidseitig je einem Stützelement längsgeführt ist.

Beim Verschieben des Gehäuserahmens entlang der Führungsschienen gelangen die Stützelemente zunächst in die in den Führungsbahnen vorgesehenen Absenkungen und bewirken damit, daß die den Gehäuserahmen mit den Schiebeverschlußplatten beaufschlagende Verspannung der Federorgane frühzeitig abgebaut wird.

Nachfolgend wird die Erfindung unter Bezugnahmen auf die Zeichnungen näher erläutert.
Es zeigt:
- Fig.1: einen Längsschnitt eines erfindungsgemässen Schiebeverschlusses,
- Fig.2: eine Ansicht auf die Unterseite des Schiebeverschlusses nach Fig.1,
- Fig.3: einen Querschnitt des Schiebeverschlusses nach Fig.1, wobei dieser nur hälftig dargestellt ist, und
- Fig.4: einen Längsschnitt einer Ausführungsvariante eines teilweise dargestellten Behälterausgusses und dem daran anschliessenden Schiebeverschluss nach Fig.1.

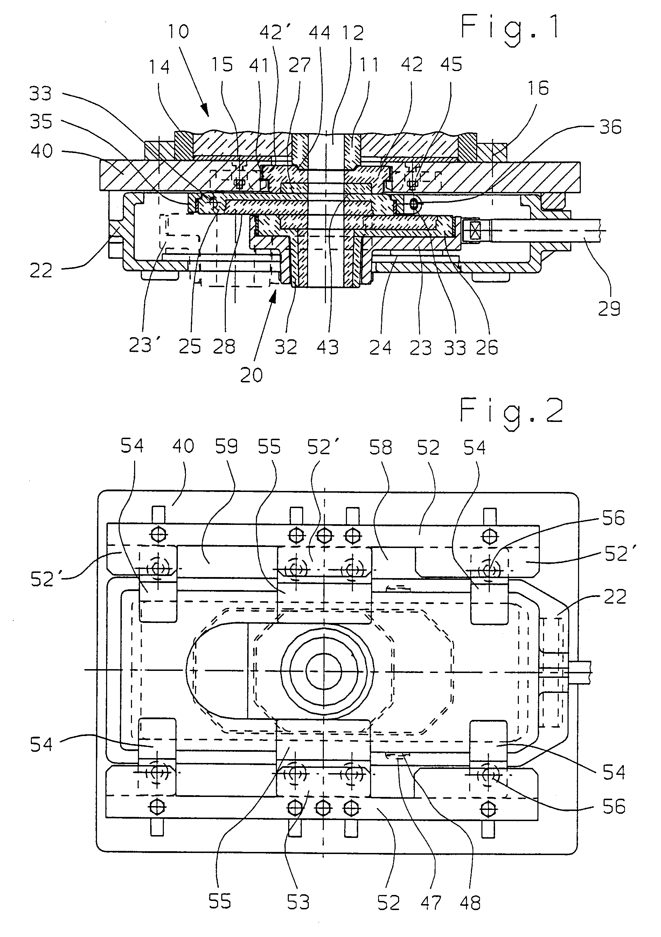

Fig.1 zeigt einen Schiebeverschluss 20, welcher am Ausguss 12 eines Metallschmelze enthaltenden Behälters 10 angeordnet ist. Bei diesem andeutungsweise veranschaulichten Behälter 10 handelt es sich um einen Konverter, bei dem der Ausguss 12 nicht auf der Unterseite, sondern im oberen Bereich der Seitenwandung desselben angeordnet ist und dieser bei der Entleerung gekippt und die darin vorgängig behandelte Metallschmelze aus dem als Abstich bezeichneten Ausguss 12 ausläuft. Von dem als Konverter vorgesehenen Behälter 10 ist dabei nur ein aussenseitiger metallener Auslaufstutzen 14, eine darin eingebettete Einlaufhülse 11 teilweise und darüberhinaus eine Abschlussplatte 15 dargestellt. Dieser Behälter 10 ist ansonsten ähnlich ausgebildet wie derjenige des Konverters gemäss der Fig.1 der eingangs erwähnten Druckschrift DE-PS 25 23 928. An einen am Auslaufstutzen 14 angebrachten Flansch 16 ist eine Adapterplatte 40 lösbar fixiert, an welche ihrerseits der Schiebeverschluss 20 befestigbar ist.

Dieser Schiebeverschluss 20 hat einen Gehäuserahmen 22, in welchem eine stationäre feuerfeste Bodenplatte 25 mit einer unteren Gleitfläche 28, eine an letztere abdichtend anpressbare Schieberplatte 26 und eine diese Schieberplatte 26 haltende, im Gehäuserahmen 22 auf Führungsschienen 24 längsverschiebbar angeordnete Schiebereinheit 23 vorgesehen ist. Letztere wird über eine an diese ankoppelbare Schubstange 29 von einem nicht näher gezeigten Antriebsorgan, beispielsweise von einem Hydraulikzylinder, hin- und herbewegt, wodurch der Schiebeverschluss 10 in Öffnungsposition - wie dargestellt - bzw. in Schliessstellung gemäss strichlinierter Andeutung der Schiebereinheit 23' gebracht werden kann. An die Schieberplatte 26 schliesst im übrigen eine feuerfeste Ausgusshülse 32 an, durch welche die ausfliessende Metallschmelze in eine Pfanne oder dergleichen geleitet wird. Es sei hierbei noch vermerkt, dass bei Konverterabstichen kein geregeltes Abgiessen der Ausflussmenge der Metallschmelze erforderlich ist und der Schiebeverschluss daher praktisch nur entweder die Öffnungs- oder aber die Schliessposition einnimmt.

Erfindungsgemäss weist die Bodenplatte 25 auf der Oberseite eine zu ihrer unteren Gleitfläche 28 parallele Gleitebene 27 auf und sie ist in Richtung dieser Gleitfläche 28 stationär, indessen senkrecht dazu verstellbar im Gehäuserahmen 22 angeordnet. Dadurch ist sie an einen am Behälterausguss 12 befestigbaren feuerfesten Kopfteil 42 anpressbar und bildet zusammen mit letzterem eine dichte Trennstelle. Die Bodenplatte 25 ist in einer Kassette 35 gehalten, welche im Gehäuserahmen 22 mittels senkrecht zur Gleitfläche 28 ausgerichteten Längsnuten 33 und darin eingreifender Bolzen 36 verstellbar gehalten ist. Diese gegenseitige Anordnung der Bodenplatte 25 im Gehäuserahmen 22 zum Kopfteil 42 am Behälterausguss ermöglicht grundsätzlich dieses neuartige Wegnehmen bzw. Montieren des Gehäuserahmens 22 mitsamt den Platten 26, 28 und der Schiebereinheit 23 vom bzw. an den Behälter 10.

Der scheibenförmig ausgebildete Kopfteil 42 ist unten mit einer ebenen Stirnfläche 43, dagegen oben mit einer stirnseitigen Kreisnut 44 versehen, in welche sich ein ringförmiger Ansatz der Ausgusshülse 11 erstreckt und dazwischen vorteilhaft ein aushärtender Mörtel eingesetzt ist. Die zylindrisch ausgebildete Aussenseite des Kopfteils 42 ist mit einem Flansch 42' versehen, welcher in einer ringförmigen Ausnehmung 41 in der Adapterplatte 40 in Richtung der Ausgussöffnung 12 positioniert und darin mittels Klemmelementen 45 von unten her fixiert ist. Bei weggenommenem Schiebeverschluss 20 kann dieser Kopfteil 42 ebenfalls gelöst und ausgewechselt werden. In montiertem Zustand steht die untere ebene Stirnfläche 43 des Kopfteils 42 zu derjenigen der Adapterplatte 40 vor und gestattet dadurch, dass sie mit der Gleitebene 27 auf der Oberseite der Bodenplatte 25, welche ebenfalls über den Gleitrahmen 22 hinausragt, in Berührung steht.

Die feuerfeste Boden- 25 wie auch die Schieberplatte 26 und die Ausgusshülse 32 sind im übrigen in herkömmlicher Weise mit je einem hochwertigen feuerfesten, z.B. aus Zirkon bestehenden Einsatz bestückt, welcher jeweils in einem feuerfesten Basismaterial eingebettet ist.

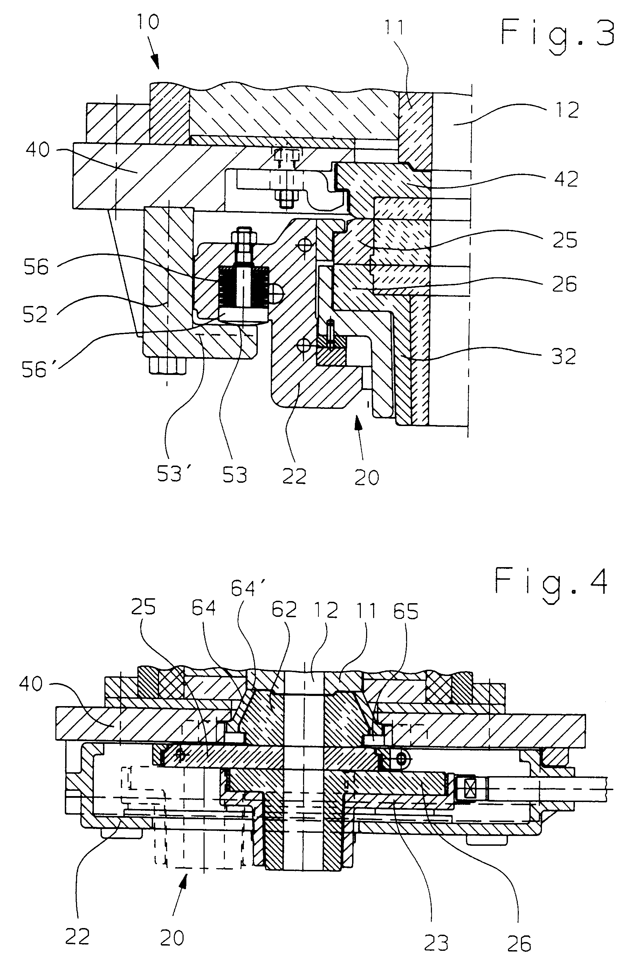

Gemäss Fig.2 und Fig.3 weist die an den Behälter 10 mittels Schrauben oder dergleichen befestigte Adapterplatte 40 zwei parallel zueinander angeordnete L-förmige Führungsschienen 52 mit je einer innenliegenden Führungsbahn 53 auf. Bei montiertem Gehäuserahmen 22 - wie in Fig.2 und Fig.3 veranschaulicht ist - stehen an diesem auf beiden Seiten je drei Stützelemente 54, 55 vor, von denen die beiden äusseren je ein, indessen das mittlere zwei Federorgane 56 aufweist. Letzteren ist je ein Führungsbolzen 56' zugeordnet, welcher von Tellerfedern auf die Führungsbahn 53 mit einer senkrecht zu dieser erfolgenden Kraftwirkung gedrückt ist. In dem gezeigten verspannten Zustand des Schiebeverschlusses 20 entsteht somit ein Kraftfluss, der ausgehend von der Führungsschiene 52 auf die Federorgane 56, nachfolgend quer durch den Gehäuserahmen 22, die Schiebereinheit 23, die übereinander angeordneten feuerfesten Platten 25 bis zum Kopfteil 42 führt, was aus der Fig.3 ersichtlich ist. Damit ist gewährleistet, dass beim Abgiessen zwischen diesen Platten keine Stahlschmelze ausfliessen kann. Die Führungsschienen 52 sind mit Ausnehmungen 58, 59 und an den daraus entstehenden Teilstücken 52' sind die jeweiligen Führungsbahnen 53 endseitig mit Absenkungen 53' versehen. Der Gehäuserahmen 22 kann daher beim Wegnehmen durch Bewegung in Verschieberichtung der Schiebereinheit 23 mittels eines nicht näher gezeigten Antriebsorganes als erstes von der Verspannung gelöst. Die Stützelemente 54, 55 des Gehäuserahmens 22 gelangen dann u.a. in die Ausnehmungen 58, 59 zwischen diesen Führungsschienen 52 und der Gehäuserahmen kann dann vom Behälter 10 weggenommen werden, beispielsweise mittels eines Krans oder eines Hubstaplers. Die Anordnung und die Bemessung der Ausnehmungen 58, 59 ist dabei entsprechend auf diejenige der Stützelemente 54, 55 abgestimmt. Bei dem Antriebsorgan für das Verschieben des Gehäuserahmens kann dasselbe benützt werden, welches die Schiebereinheit 23 über die Schubstange 29 verschiebt. Selbstverständlich kann der Gehäuserahmen auch unabhängig von der Schubstange 29 ein- und ausgeschoben werden.

Beim Wegnehmen des Gehäuserahmens 22 wird die Schiebereinheit vorerst bis zu deren angedeuteten Schliessstellung 23' und folglich noch weiter in diese Schliessrichtung verschoben, wodurch der Rahmen 22 mitbewegt und dieser sich entlang der Führungsbahnen 53 bis zur Entlastung seiner Federorgane 56 verschoben wird und sobald seine seitlichen Stützelemente 54, 55 in die Ausnehmungen 58, 59 gelangen, ist er vom Behälter gelöst. Beim Montieren des Gehäuserahmens 22 an dem Behälter 10 erfolgt dasselbe Prozedre in umgekehrter Reihenfolge, wobei die Schiebereinheit 23 dann aber in Offenstellung verschoben ist und dabei diesen Rahmen 22 zieht.

Die in der Kassette 35 gehaltene Bodenplatte 25 weist gemäss der in Fig.2 gezeigten Variante beidseitig je einen Nocken 48 auf, welche von der Oberseite in je eine offene Längsnut 47 im Gehäuserahmen 22 eingeschoben werden können, wodurch diese Kassette 35 und damit die Bodenplatte 25 wiederum in Richtung ihrer Gleitfläche 28 stationär, indessen senkrecht dazu verstellbar angeordnet ist. Diese Anordnung bringt überdies den Vorteil, dass diese Kassette nach dem Entfernen des Gehäuserahmens 22 vom Behälter 10 ohne jegliche Hilfsmittel herausgenommen bzw. eingelegt werden kann.

Fig.4 zeigt den Schiebeverschluss 20 mit einer unterschiedlichen Anordnung und Ausbildung des Kopfteils 62 bzw. des Auslaufs des Behälters. Es ist daher nachfolgend nurmehr auf diesen Unterschied gegenüber dem Kopfteil nach Fig.1 eingegangen. Der Kopfteil 62 ist an seinem Aussenumfang konisch ausgestaltet und in einem entsprechend geformten Ring 64 gehalten. Letzterer ist seinerseits von Befestigungsmitteln in einer Ausnehmung der Adapterplatte 40 lösbar fixiert. Dieser Ring 64 weist zudem einen oberen stirnseitigen Anschlag 64' auf, an dem die Ausgusshülse 11 ansteht. Dadurch kann verhindert werden, dass sich diese Ausgusshülse 11 im Betriebszustand gegen den Kopfteil 62 hin ausdehnen kann. Ansonsten weist dieser Kopfteil 62 wiederum an seiner Unterseite eine ebene Gleitfläche auf, an der die Gleitebene der Bodenplatte 25 anliegt.

Die Erfindung ist mit den gezeigten Ausführungsbeispielen genügend dargetan. Es sei hierbei noch darauf hingewiesen, dass dieser Schiebeverschluss nach der Erfindung sich grundsätzlich auch für eine bei Stranggiessanlagen verwendete Pfanne oder für ein Verteilergefäss eignet.

## Patentansprüche

1. Schieberverschlußsystem für einen Metallschmelze enthaltenden Behälter, mit einer feuerfesten Bodenplatte (25) und einer an letzterer mittels Federorganen (56) abdichtend anpreßbaren feuerfesten Schieberplatte (26), welche längsverschiebbar in einer Schiebereinheit (23) angeordnet ist, wobei die Bodenplatte (25) auf ihrer Unterseite eine Gleitfläche (28) und auf ihrer Oberseite eine zur Gleitfläche (28) parallele Gleitebene (27) aufweist, mit welcher die Bodenplatte (25) an einem am Behälterausguß (12) positionierten feuerfesten Kopfteil (42, 62) anpreßbar ist, wobei ein die Bodenplatte (25) sowie die Schiebereinheit (22) mit der Schieberplatte (23) aufnehmender Gehäuserahmen (22) vorgesehen ist, der durch Verschieben desselben vom Behälter (10) wegnehmbar ist und in welchem die Bodenplatte (25) in Richtung ihrer Gleitfläche (28) stationär, indessen senkrecht dazu verstellbar lagert,
dadurch gekennzeichnet,
daß der Gehäuserahmen (22) unterhalb des Behälterausgusses (12) auf quer zu diesem verlaufenden und an ihm befestigten Führungsschienen (52) längsverschiebbar gehalten ist, und daß die Federorgane (56) durch Verschieben des Gehäuserahmens (22) um einen definierten Hub von ihrer Verspannung lösbar sind.

2. Schieberverschlußsystem nach Anspruch 1,
dadurch gekennzeichnet,
daß zwei parallel zueinander angeordnete L-förmige Führungsschienen (52) vorgesehen sind, die jeweils eine innenliegende, endseitig je eine Absenkung (53') aufweisende Führungsbahn (53) bilden, auf welchen der Gehäuserahmen (22) mit beidseitig je einem Stützelement (54, 55) längsgeführt ist.

3. Schieberverschlußsystem nach Anspruch 1 oder 2,
dadurch gekennzeichnet,
daß der Gehäuserahmen (22) von der Betriebsstellung in eine außerhalb dieser liegende Position bewegbar und vom Behälter (10) freigegeben ist, nachdem die Federorgane (56) von ihrer Verspannung gelöst sind.

4. Schiebetuerschlußsystem nach einem der vorhergehenden Ansprüche,
dadurch gekennzeichnet,
daß der Kopfteil (42) eine untere ebene Stirnfläche (43) hat, die zu derjenigen der Adapterplatte (40) vorsteht und daran die Gleitebene (27) auf der Oberseite der Bodenplatte (25) anschließt, welche ihrerseits über den Gehäuserahmen (22) hinausragt.

5. Schieberverschlußsystem nach einem der vorhergehenden Ansprüche,
dadurch gekennzeichnet,
daß die Bodenplatte (25) in einer Kassette (35) gehalten ist, welche im Gehäuserahmen (22) mittels senkrecht zur Gleitfläche (28) ausgerichteter Längsnuten (33) und darin eingreifender Bolzen (36) verstellbar gehalten ist.

## Claims

1. Sliding gate valve system for a vessel containing molten metal including a refractory base plate (25) and a refractory sliding plate (26), which may be sealingly pressed against the latter by means of spring elements (56) and which is longitudinally slidably arranged in a slider unit (23), the base plate having a sliding surface (28) on its underside and a sliding plane (27) parallel to the sliding surface (28) on its upper surface with which the base plate (25) may be pressed against a refractory headpiece (42, 62) positioned on the vessel outlet (12), a housing frame (22) being provided which receives the base plate (25) and the slider unit (22) with the sliding plate (23) and which is removable from the vessel (10) by sliding the same and in which the base plate (25) is mounted stationarily in the direction of its sliding surface (28) but movably perpendicular thereto, characterised in that the housing frame (22) is longitudinally slidably mounted beneath the vessel outlet (12) on guide rails (52), which extend transversely to it and are secured to it, and that the spring elements (56) may be relieved of their biasing force by sliding the housing frame (22) through a predetermined distance.

2. Sliding gate valve system as claimed in Claim 1, characterised in that two L-shaped guide rails (52) are provided which are arranged parallel to one another and which each afford an inner guide hack (53) which has a respective depression (53') at its end and on which the housing frame (22) is longitudinally guided with a respective support element (54, 55) on both sides.

3. Sliding gate valve system as claimed in Claim 1 or 2, characterised in that the housing frame (22) is movable from the operational position into a position situated outside it and is released from the vessel (10) after the spring elements (56) have been relieved of their biasing force.

4. Sliding gate valve system as claimed in one of the preceding claims, characterised in that the headpiece (42) has a lower flat end surface (43) which projects with respect to that of the adapter plate (40) and adjoining which is the sliding plane (27) on the upper surface of the base plate (25) which for its part projects beyond the housing frame (22).

5. Sliding gate valve system as claimed in one of the preceding claims, characterised in that the base plate (25) is mounted in a cassette (35) which is movably mounted in the housing frame (22) by means of longitudinal grooves (33) aligned perpendicular to the sliding surface (28) and pegs (36) engaging therein.

## Revendications

1. Système de fermeture à tiroir pour une cuve contenant un bain de métal en fusion, comprenant une plaque de fond (25) réfractaire et une plaque de tiroir (26) qui est pressée contre cette dernière par des éléments élastiques (56) de manière à réaliser l'étanchéité, ladite plaque de tiroir étant montée coulissante dans un ensemble tiroir (23), la plaque de fond (25) comportant, sur sa face inférieure, une surface de glissement (28) et, sur sa face supérieure, un plan de glissement (27) qui est parallèle à la surface de glissement (28), avec lequel la plaque de fond (25) est pressée contre un élément de tête (42, 62) réfractaire placé sur la buse de coulée (12) de la cuve, un cadre (22) qui reçoit la plaque de fond (25) ainsi que l'ensemble tiroir (23) avec la plaque de tiroir (23) qui peut être éloigné de la cuve (10) par coulissement et dans lequel la plaque de fond (25) est montée stationnaire dans la direction de sa surface de glissement (28) et réglable dans la direction perpendiculaire à celle-ci étant prévu, caractérisé par le fait que le cadre (22), en-dessous de la buse de coulée (12) de la cuve, est supporté avec possibilité de coulissement sur des glissières (52) disposées transversalement audit cadre et fixées à celui-ci, et par le fait que les éléments élastiques (56) peuvent eue relâchés par coulissement du cadre (22) d'une valeur de course déterminée.

2. Système de fermeture à tiroir selon la revendication 1, caractérisé par le fait qu'il est prévu deux glissières (52) en forme de L qui sont disposées parallèlement l'une à l'autre et forment chacune une piste de guidage (53) intérieure pourvue d'une déclivité (53') à son extrémité, sur laquelle le cadre (22) est guidé de chaque côté par un élément d'appui (54, 55).

3. Système de fermeture à tiroir selon la revendication 1 ou 2, caractérisé par le fait que le cadre (22) peut être déplacé de la position de travail dans une position éloignée de celle-ci et dégagé de la cuve (10) après que les éléments élastiques (56) ont été relâchés.

4. Système de fermeture à tiroir selon une des revendications précédentes, caractérisé par le fait que l'élément de tête (42) comporte une surface frontale inférieure (43) plane en saillie par rapport à la surface frontale de la plaque d'adaptation (40) et que le plan de glissement (27) sur la face supérieure de la plaque de fond (25) est en contact avec celle-ci, le plan de glissement, lui-même, dépassant au-delà du cadre (22).

5. Système de fermeture à tiroir selon une des revendications précédentes, caractérisé par le fait que la plaque de fond (25) est fixée dans une cassette (35) qui est montée réglable dans le cadre (22) au moyen de rainures longitudinales (33) perpendiculaires à la surface de glissement (28) et de vis (36) qui s'engagent dans celles-ci.
